Europäisches Patentamt

European Patent Office

Office européen des brevets

(11) Publication number: **0 143 256**
**B1**

# EUROPEAN PATENT SPECIFICATION

(45) Date of publication of patent specification: **16.12.87**

(21) Application number: **84111485.3**

(22) Date of filing: **26.09.84**

(51) Int. Cl.⁴: **B 41 J 15/16, B 41 J 15/00**

(54) **Web feed mechanism.**

(30) Priority: **25.10.83 JP 164074/83 u**

(43) Date of publication of application:
**05.06.85 Bulletin 85/23**

(45) Publication of the grant of the patent:
**16.12.87 Bulletin 87/51**

(84) Designated Contracting States:
**DE FR GB**

(56) References cited:
**DE-A-2 542 091**
**US-A-3 908 810**

(73) Proprietor: **Kabushiki Kaisha Sato**
**15-5, 1-chome, Shibuya**
**Shibuya-ku Tokyo (JP)**

(72) Inventor: **Ito, Kaoru**
**Dai-4-chiwari, 174-banchi Oohata**
**Hanamaki-shi Iwate-ken (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

### Background of the Invention
*Field of the Invention*

The present invention relates to a feed mechanism for feeding a web such as a printing medium of a printer or the like and, more particularly, to a web feed mechanism which is effective for the stepwise feeding of a web having a small thickness.

*Description of the Prior Art*

The feed mechanism of the above-specified kind according to the prior art is equipped with nothing but a dragging mechanism. When the feed mechanism is operated for stepwise feed, a web being fed may frequently overrun to become slack on its running path so that the tension applied thereto on the path cannot be constant, resulting in noise from the web and/or an undulating feed path.

A web feed mechanism according to the preamble part of claim 1 is known from DE—A—2 542 091. This document discloses a web feed mechanism for feeding a web under constant tension from a roll of web comprising a carrier in the form of a brake lever which is movable toward and away from the centre of the web roll and biased toward said centre by means of a coil spring. Moreover, said known feed mechanism includes a member carried on said carrier in the form of a brake portion which contacts the outermost web portion of said web roll for applying a drag to said outermost web portion.

This known feed mechanism basically suffers from the same drawbacks as the feed mechanism described hereinbefore.

### Summary of the Invention

The present invention has been conceived in view of the above-specified defect and has an object to provide a web feed mechanism which can hold a web on a running path under a constant tension so that it can be freed from noises.

With a web feed mechanism according to the preamble part of claim 1, the solution of this object is achieved by the characterizing features of claim 1.

With the web feed mechanism according to the present invention, it can advantageously be achieved that the unwound portion of the web can be prevented from generating noises and/or undulating runs which might otherwise be caused by the fluctuations or interruptions of the tension applied thereto.

Moreover, the web feed mechanism according to the present invention is capable of absorbing slackness of the web due to an overrun of the unwound portion of said web by the backward sliding movement of the slide.

The dependent claims contain advantageous embodiments of the present invention.

Thus, the provision of a drag rubber advantageously ensures the drag.

With the advantageous embodiment according to claim 4, a smooth contact with the outermost web portion of the web roll can be achieved.

Finally, with the advantageous embodiment according to claim 5, the sliding movements of the slide plate may advantageously be guided.

In short, according to the present invention, there is provided a web feed mechanism which is enabled to absorb the slackness of the web on the running path by applying a drag to the outermost portion of the web roll and by causing the slide to slide in the tengential directions of the web roll both forward, *i.e.* the web unwinding direction, and backward, *i.e.* the web winding direction.

### Brief Description of the Drawing

Other objects, features and advantages of the present invention will become apparent from the following description taken in conjunction with the accompanying drawing, in which:

Fig. 1 is a schematic view showing a web feed mechanism according to one embodiment of the present invention; and

Fig. 2 is an enlarged schematic view for illustrating the operating principle of the web feed mechanism by showing an essential portion of Fig. 1 on an enlarged scale.

### Description of the Preferred Embodiment

The present invention will be described in the following in connection with the embodiment thereof with reference to the accompanying drawing where it is applied to a feed mechanism for feeding the heat transfer carbon paper or ribbon of a heat transfer type thermal printer.

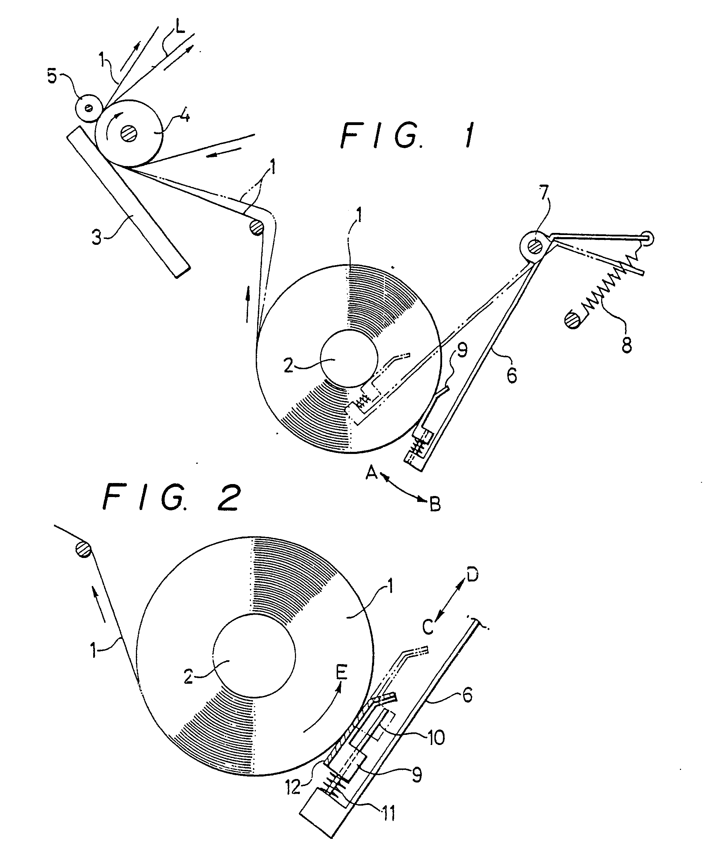

As shown in Fig. 1, the heat transfer carbon paper or web 1 is held in the form of a roll on a core 2 acting as a holding member. The heat transfer carbon paper 1 is fed to a clearance between a thermal head 3 and a platen roller 4 so that it can be used to print a continuous web of labels L, until it is fed out by the coactions of the platen roller 4 and a follower roller 5.

A lever 6 acting as a carrier is hinged by means of a pin 7 and is always biased by the biasing force of a coil spring 8 toward the core 2, i.e., toward the outermost paper portion of the paper roll 1 (or in such a direction as is indicated by arrow A). As a result, the lever 6 can swing toward and away from the core 2, i.e., in the directions of arrows A and B in accordance with changes in the external diameter of the paper roll 1. The lever 6 thus constructed carries a slide plate 9 at its portion in which it comes close to the paper roll 1. More specifically, the slide plate 9 is carried or supported on the lever 6 by means of a guide shaft 10 anchored at the lever 6 such that it can slide in the longitudinal directions of the lever 6, i.e., in the tangential directions of the paper roll 1 both forward (or in the direction of arrow C), in which direction the paper is unwound from the paper roll, and backward (or in the direction of arrow D), in which direction the paper is wound onto the paper roll 1. Here, the slide plate 9 is also biased in the direction D at all times by the biasing force of a backspin coil spring 11. At the same time, the slide plate 9 is biased toward the core through the guide shaft 10 and the lever 6 by the biasing force of the coil spring 8. As a result, the slide plate 9 is caused to apply a drag to the outermost paper portion of the paper roll 1 being fed. In order to ensure that drag, the surface of the slide plate 9 which is to be brought into contact with the outermost paper portion of the paper roll 1 is covered with rubber 12. Thus, the rubber 12 provides a frictional face contacting with that outermost paper portion. The frictional face of the rubber 12 is shaped to extend generally flatly in the tangential directions of the paper roll 1 but to be bent at its trailing end away from the core 2 for smoothly contacting with the outermost paper portion of the paper roll 1.

The operations of the web feed mechanism thus constructed will be described in the following.

When the heat transfer carbon paper 1 is pulled and unrolled in accordance with the progress of the printing operation at the thermal head 3, a frictional force is established between the drag rubber 12 and the carbon paper 1 so that the backspin coil spring 11 is compressed to have its biasing force strengthened by the pulling force established through the frictional force. Meanwhile, the unwound portion of the carbon paper 1 is dragged and tensed until the slide plate 9 is brought in the forward direction C into a first position, as indicated by solid lines in Fig. 2 during one feed stroke of the carbon paper 1 against the biasing force of the coil spring 11 being strengthened.

Once the pulling force overcomes the biasing force of the coil spring 11 during that feed stroke, the unwound portion of the carbon paper 1 is pulled to frictionally slide on the surface of the rubber 12 so that the paper roll 1 is rotated to stepwise unwind one pitch of the carbon paper 1 having a length corresponding to the turn of the platen roller 4. At this particular instant, i.e., just at the end of the feed stroke, the slide plate 9 is still in the first position shifted in the direction C while compressing the coil spring 11.

After that feed stroke, when the pulling force is weakened to zero so that it is overcome by the biased force of the coil spring 11, the slide plate 9 is caused to frictionally or smoothly slide in the backward direction D on the outermost paper portion of the paper roll 1 into a second or initial position, as indicated by double-dotted lines in Fig. 2, by that biasing force thereby to pin back the paper roll 11. The weakening of the pulling force is also caused by the slackness of the unwound portion of the carbon paper 1 on the running path, as indicated by a double-dotted line in Fig. 1, due to the overrun of the unwound paper portion, because the turn of the platen roller 4 is a stepwise or intermittent one so that it imparts an inertia at some level to the carbon paper 1. Thus slackness thus caused can be absorbed through the backward (i.e., in the direction D) frictional sliding movement of the slide plate 9 by the biasing force of the backspin coil spring 11. In other words, when the slide plate 9 is returned or brought in the backward direction D, the frictional force is restored between the rubber 12 and the carbon paper 1 to turn back the paper roll 1 in a direction, as indicated by letter E in Fig. 2, thereby to eliminate the slackness.

By repeating the stepwise operations thus far described, the slide plate 9 slides in the forward direction C and in the backward direction D to eliminate the slackness of the unwound carbon paper 1 on its running path thereby to prevent noise. As is different from the simple dragging device of the feed mechanism of the prior art, moreover, the slip loss of the heat transfer carbon paper 1, which is caused at the thermal head 3 at the rise in the rotations of the platen roller 4, can be absorbed and dropped by the quick sliding movement of the slide plate 9 in the forward direction C. Moreover, the carbon paper 1 on the running path can always be held under a constant tension by the drag which is ensured as a result of the frictional sliding movements of the slide plate 9 in the directions C and D and by the biasing force of the lever 6 in the direction A.

In the present embodiment, the present invention has been described as applied to the printer of stepwise feed type, but it can be applied to an arbitrary feed type. Moreover, the application of the present invention should not be limited to the heat transfer carbon paper having a very small thickness but to an arbitrary web.

Where the present invention is applied to the printer of continuous feed type, for example, the backspin coil spring 11 may bias the slide plate 9 in the backward direction D to hold the unwound portion of the carbon paper 1 under such a tension during the pulling operation as is caused by the balance between the drag and the pulling force.

As has been described hereinbefore, according to the present invention, a very thin web such as the heat transfer carbon paper can be subjected to the back tension while being ensured to run forward and backward in the feed direction. As a result, no slackness occurs in the web on the running path so that the unwound portion of the web can be prevented from noise and/or undulating runs which might otherwise be caused by the fluctuations or interruptions of the tension applied thereto.

**Claims**

1. A web feed mechanism for feeding a web (1) under constant tension from a roll (2) of web (1), comprising:
   — a carrier (6) movable toward and away from the centre of the web roll (2) and biased toward the centre of same, and
   — a member (9) carries on said carrier (6) so as to contact the outermost web portion of said web roll for applying a drag to said outermost web portion, characterized in that said member contacting the outermost web portion is formed as a

5
0 143 256
6

slide plate (9) and mounted such that it is biased in the tangential direction corresponding to the winding of the web on the web roll, the force applied to the slide plate (9) by the biasing means (11) being such that the drag applied by the slide plate balances the pulling force applied to the web (1) to unwind it from the web roll (2).

2. A web feed mechanism according to claim 1, being characterized in that said carrier includes a lever (6) hinged and biased toward the centre of said web roll (2).

3. A web feed mechanism according to claim 1, being characterized in that said slide (9) includes a drag rubber (12) having a frictional face contacting with the outermost web portion of said web roll (2).

4. A web feed mechanism according to claim 3, being characterized in that said drag rubber (12) has its frictional face extending generally flatly in said tangential direction but bent at its trailing end away from the centre of said web roll (2).

5. A web feed mechanism according to claim 1, being characterized in that said carrier (6) includes a guide shaft (10) mounted thereon.

6. A web feed mechanism according to claim 5, being characterized in that said biasing means (11) includes a backspin coil spring (11) mounted around said guide shaft (10) and sandwiched under compression between said carrier (6) and said slide (9).

**Patentansprüche**

1. Vorrichtung zum Fördern einer Papierbahn (1) unter konstanter Spannung von einer aus Papierbahn (1) bestehenden Rolle (2) mit:

einem Träger (6), der zum Zentrum der Papierbahnrolle (2) hin und von diesem weg beweglich ist und in Richtung auf das Zentrum vorgespannt ist, und mit

einem Teil (9), das auf dem Träger (6) derart angeordnet ist, daß es den äußersten Papierbahnbereich der Papierbahnrolle zum Aufbringen eines Widerstandes auf den äußersten Papierbahnbereich berührt, dadurch gekennzeichnet, daß das den äußersten Papierbahnbereich berührende Teil als eine Gleitplatte (9) ausgebildet ist und derart angeordnet ist, daß es in Tangentialrichtung entsprechend dem Aufwickeln von Papierbahn auf die Papierbahnrolle vorgespannt ist, wobei die auf die Gleitplatte (9) durch die Vorspanneinrichtung (11) aufgebrachte Kraft so ist, daß der von der Gleitplatte aufgebrachte Widerstand die Zugkraft ausgleicht, die auf die Papierbahn (1) aufgebracht wird, um diese von der Papierbahnrolle (2) abzuwickeln.

2. Vorrichtung zum Fördern einer Papierbahn nach Anspruch 1, dadurch gekennzeichnet, daß der Träger einen Hebel (6) aufweist, der in Richtung auf das Zentrum der Papierbahnrolle (2) angelenkt und vorgespannt ist.

3. Vorrichtung zum Fördern einer Papierbahn nach Anspruch 1, dadurch gekennzeichnet, daß die Gleitplatte (9) einen Widerstandsgummi (12) aufweist, der eine Reibfläche hat, die den äußersten Papierbahnbereich der Papierbahnrolle (2) berührt.

4. Vorrichtung zum Fördern einer Papierbahn nach Anspruch 3, dadurch gekennzeichnet, daß die Reibfläche des Widerstandsgummis (12) sich im wesentlichen in Tangentialrichtung in ebener Weise erstreckt, aber an ihrem hinteren Ende vom Zentrum der Papierbahnrolle (2) weggebogen ist.

5. Vorrichtung zum Fördern einer Papierbahn nach Anspruch 1, dadurch gekennzeichnet, daß der Träger (6) eine Führungswelle (10) aufweist, die auf diesem angeordnet ist.

6. Vorrichtung zum Fördern einer Papierbahn nach Anspruch 5, dadurch gekennzeichnet, daß die Vorspanneinrichtung (11) eine Rückdreh-Schraubenfeder (11) aufweist, die um die Führungswelle (10) herum angeordnet ist und unter Druck zwischen dem Träger (6) und der Gleitplatte (9) angeordnet ist.

**Revendications**

1. Mécanisme d'avancement de bande pour faire avancer une bande (1) sous tension constante depuis une bobine (2) de bande (1), comprenant:

— un support (6) mobile de manière à se rapprocher et à s'éloigner du centre de la bobine de bande (2) et sollicité vers ce même centre, et

— un élément (9) porté sur le support (6) de manière à entrer en contact avec la partie de bande extérieure de la bande de bobine pour appliquer une traction à cette partie de bande extérieure,

caractérisé en ce que ledit élément en contact avec la partie extérieure de la bande se présente sous la forme d'une plaque-coulisseau (9) et est monté de façon à être sollicité dans le sens tangentiel correspondant à l'enroulement de la bande sur la bobine de bande, la force appliquée à la plaque-coulisseau (9) par le moyen de sollicitation (11) étant telle que la résistance frottante appliquée par la plaque-coulisseau équilibre la force de traction appliquée à la bande (1) pour la dérouler de la bobine de bande (2).

2. Mécanisme d'avancement de bande selon la revendication 1, caractérisé en ce que le support comporte un levier (6) articulé et sollicité vers le centre de la bobine de bande (2).

3. Mécanisme d'avancement de bande selon la revendication 1, caractérisé en ce que le coulisseau (9) comprend un frotteur un caoutchouc (12) présentant une face de friction en contact avec la partie de bande extérieure de la bobine de bande (2).

4. Mécanisme d'avancement de bande selon la revendication 3, caractérisé en ce que la face de friction du frotteur en caoutchouc (12) s'étend dans l'ensemble à plat dans ledit sens tangentiel mais est coudée à son extrémité arrière vers l'apposé du centre de la bobine de bande 2.

5. Mécanisme d'avancement de bande selon la revendication 1, caractérisé en ce que le support (6) comprend une tige de guidage (10) montée sur lui.

6. Mécanisme d'avancement de bande selon la revendication 5, caractérisé en ce que le moyen de sollicitation (11) comprend un ressort à boudin de contre-effet (11) monté autour de la tige de guidage (10) et interposé sous compression entre le support (6) et le coulisseau (9).

FIG. 1

FIG. 2